# EUROPÄISCHE PATENTSCHRIFT

(11) **EP 3 427 632 B1**
(45) Veröffentlichungstag und Bekanntmachung des Hinweises auf die Patenterteilung: **02.11.2022**
(21) Anmeldenummer: 18181796.6
(22) Anmeldetag: 05.07.2018
(51) Int. Cl.: A47L 15/48, A47L 15/42

(54) **BETRIEBSVERFAHREN FÜR EINE GESCHIRRSPÜLMASCHINE MIT EINEM WÄRMEPUMPENKREISLAUF UND GESCHIRRSPÜLMASCHINE MIT EINEM WÄRMEPUMPENKREISLAUF**
OPERATING METHOD FOR A DISHWASHER WITH A HEAT PUMP CIRCUIT AND A DISHWASHER PROVIDED WITH A HEAT PUMP CIRCUIT
PROCÉDÉ DE FONCTIONNEMENT POUR UN LAVE-VAISSELLE DOTÉ D'UN CIRCUIT DE POMPE À CHALEUR ET LAVE-VAISSELLE DOTÉ D'UN CIRCUIT DE POMPE À CHALEUR

(30) Priorität: 12.07.2017 DE 102017115585; 23.01.2018 DE 102018101370; 23.01.2018 DE 102018101373
(43) Veröffentlichungstag der Anmeldung: 16.01.2019
(73) Patentinhaber: Miele & Cie. KG, 33332 Gütersloh (DE)
(72) Erfinder: Dettmer, Martin, 33607 Bielefeld (DE); Tegeler, Daniel, 33649 Bielefeld (DE); Dahms, Tobias, 30519 Hannover (DE); Bertram, Andre, 33609 Bielefeld (DE); Kornfeld, André, 33378 Rheda-Wiedenbrück (DE); Steinmeier, Ralph, 32052 Herford (DE); Nierling, Andreas, 49326 Melle (DE); Runau, Benjamin, 33611 Bielefeld (DE); Schröder, Nils, 33611 Bielefeld (DE)

(56) Entgegenhaltungen:
- EP-A1- 2 647 755
- WO-A1-2007/049190
- WO-A1-2013/050262
- WO-A1-2015/074834
- DE-C1- 4 330 456

## Beschreibung

Die Erfindung betrifft ein Verfahren zum Betreiben einer Geschirrspülmaschine, insbesondere einer Haushalts-Geschirrspülmaschine. Die Geschirrspülmaschine dient der Reinigung von Spülgut in einem Spülraum und weist einen Wärmepumpenkreislauf mit einem Wärmetauscher auf, der zusammen mit mindestens einem Ventilator zur Erzeugung eines Luftstroms in einem Luftkanal angeordnet ist.

Zur Senkung des Energieverbrauchs von Geschirrspülmaschinen ist der Einsatz von Wärmepumpen bekannt. Beispielsweise beschreibt die Druckschrift EP 2 682 038 A2 eine Geschirrspülmaschine mit einer Luft-Wasser-Wärmepumpe, die Energie aus der Umgebungsluft entnimmt, um energieintensive Schritte des Spülprogramms, z.B. ein Aufheizen von Spülflüssigkeit, zu unterstützen. Dabei ist in einem Sockel der Geschirrspülmaschine ein Luftkanal mit einem Ventilator ausgebildet, in dem ein Wärmetauscher eines Verdampfers des Wärmepumpenkreislaufs angeordnet ist. Durch den Verdampfer wird der vorbeigeführten Luft Wärme entzogen. Es ist vorgesehen, einen Lufteinlass an der vorderen Seite des Sockels der Geschirrspülmaschine zu positionieren, wobei ein Luftauslass im hinteren Bereich des Sockels nach hinten oder zu einer Seite angeordnet ist.

Aus der Druckschrift WO 2015/185086 A1 ist eine vergleichbare Anordnung eines Wärmepumpenkreislaufs in einer Geschirrspülmaschine bekannt, wobei ein Ventilator mit regelbarer Drehzahl eingesetzt wird, um den Luftstrom durch den Wärmetauscher zu erzeugen. Eine Temperatur der Spülflüssigkeit wird durch einen entsprechend angeordneten Temperatursensor ermittelt und die Drehzahl des Ventilators in Abhängigkeit der gemessenen Temperatur gesteuert. Auf diese Weise kann der Wärmetauscher und damit der Wärmepumpenkreislauf in seiner Effizienz angepasst an die Temperatur der Spülflüssigkeit betrieben werden.

Eine ausschließlich auf die Temperatur der Spülflüssigkeit abgestimmte Prozesssteuerung des Wärmepumpenkreislaufs ist jedoch nicht für alle Betriebssituationen optimal.

Die WO 2015/074834 A1 offenbart ein Verfahren zum Betreiben einer Geschirrspülmaschine, die einen Wärmepumpenkreislauf mit einem Verdampfer aufweist, der zusammen mit mindestens einem Ventilator zur Erzeugung eines Luftstroms in einem Luftkanal angeordnet ist. In Luftströmungsrichtung vor dem Verdampfer ist ein Verdichter angeordnet sowie ein Temperatursensor, der die Lufttemperatur in der Verdichterumgebung misst. Abhängig von der gemessenen Temperatur wird der Ventilator an- oder abgestellt.

Die WO 2013/050262 A1 offenbart einen Wärmepumpen-Wäschetrockner mit einem Prozesskanal, in dem die Prozessluft im Prozessluftkreislauf geführt wird und in dem ein Verdampfer, ein Verflüssiger, ein Prozesslufventilator und ein Temperatursensor angeordnet sind. Die Wärmepumpe verbindet den Verdampfer, einen Verdichter, den Verflüssiger und eine Drossel und führt ein Kältemittel in einem Kreislauf. Zur Kühlung des Verdichters ist ein Kühlventilator vorhanden, der abhängig von der Prozesslufttemperatur betrieben wird.Es ist daher eine Aufgabe der vorliegenden Erfindung, ein Betriebsverfahren der eingangs genannten Art zu schaffen, das in möglichst vielen Betriebssituationen zu einem möglichst energieeffizienten Betrieb des Wärmepumpenkreislaufs führt sowie eine Geschirrspülmaschine, welche ein derartig verbessertes Betriebsverfahren ermöglicht.

Diese Aufgabe wird gelöst durch ein Betriebsverfahren und eine Geschirrspülmaschine mit den Merkmalen der unabhängigen Ansprüche. Vorteilhafte Ausgestaltungen und Weiterbildungen sind Gegenstand der abhängigen Ansprüche.

Ein erfindungsgemäßes Verfahren zum Betreiben einer Geschirrspülmaschine zeichnet sich dadurch aus, dass in dem Luftkanal zumindest ein Drucksensor angeordnet ist, wobei eine Drehzahl des mindestens einem Ventilators abhängig von einem durch den Drucksensor gemessenen Druck variiert wird. Der Druck im Luftkanal lässt Rückschlüsse auf die Betriebssituation des Wärmetauschers zu, die maßgeblich für einen effizienten Betrieb des Wärmepumpenkreislaufs ist. Weiter ist der Volumenluftstrom im Luftkanal ein wichtiger Parameter für den Betrieb des Wärmetauschers. Die Druckmessung in Kombination mit der Beeinflussung des Volumenluftstroms durch die Drehzahlvariation des mindestens einen Ventilators ermöglicht die Einstellung eines möglichst optimalen, energieeffizienten Betriebs des Wärmepumpenkreislaufs.

Es wird ferner eine Geschirrspülmaschine zur Reinigung von Spülgut in einem Spülraum vorgeschlagen, aufweisend einen Wärmepumpenkreislauf mit einem Wärmetauscher, der zusammen mit mindestens einem Ventilator zur Erzeugung eines Luftstroms in einem Luftkanal positioniert ist, und wobei in dem Luftkanal zumindest ein Drucksensor angeordnet ist. Die Geschirrspülmaschine weist darüber hinaus eine Steuereinrichtung auf, die dazu eingerichtet ist, eine Drehzahl des mindestens einen Ventilators abhängig von einer durch den Drucksensor gemessenen Druck zu variieren. Die Geschirrspülmaschine weist vorzugsweise eine Luft-Wasser-Wärmepumpe auf, mit der Energie aus der Umgebungsluft entnommen werden kann. Damit werden energieintensive Schritte des Spülprogramms, z.B. ein Aufheizen von Spülflüssigkeit, durchgeführt oder unterstützt. Dabei ist vorzugsweise in einem Sockel der Geschirrspülmaschine der Luftkanal mit dem Ventilator ausgebildet, wobei in dem Luftkanal ein Wärmetauscher eines Verdampfers des Wärmepumpenkreislaufs angeordnet ist. Durch den Verdampfer wird der vorbei- bzw. hindurchgeführten Luft Wärme entzogen. Es ist insbesondere vorgesehen, einen Lufteinlass an der vorderen Seite des Sockels der Geschirrspülmaschine zu positionieren, wobei ein Luftauslass im hinteren Bereich des Sockels nach hinten oder zu einer Seite angeordnet ist.

In einer vorteilhaften Ausgestaltung des Verfahrens bzw. der Geschirrspülmaschine wird die Drehzahl des mindestens einen Ventilators zudem abhängig von einer Temperatur variiert. Bevorzugt ist dabei im Luftkanal mindestens ein Temperatursensor angeordnet. Auch die Temperatur, insbesondere im Luftkanal hinter dem Wärmetauscher, beispielsweise am Luftauslass des Luftkanals gemessen, ist ein relevanter Betriebsparameter, nicht nur für den Wärmepumpenkreislauf selbst, sondern auch für den Komfort der Benutzer, der z.B. durch eine zu kalte Abluft aus dem Luftkanal geschmälert wird.

In einer weiteren vorteilhaften Ausgestaltung der Erfindung sind mindestens zwei Drucksensoren, von denen zumindest einer im Luftkanal angeordnet ist, zur Messung von zwei Drücken vorgesehen. Bevorzugt wird die Drehzahl des mindestens einen Ventilators abhängig von einer Druckdifferenz zwischen den gemessenen Drücken variiert.

Um die Betriebssituation des Wärmetauschers bestmöglich erfassen zu können, wird bevorzugt ein Drucksensor vor und ein Drucksensor in Luftstromrichtung hinter dem Wärmetauscher positioniert. Es kann beispielsweise vorgesehen sein, die Drehzahl des mindestens einen Ventilators zu erhöhen, wenn die Druckdifferenz einen vorgegebenen Druckdifferenz-Grenzwert überschreitet. Auf diese Weise wird verhindert, dass z.B. aufgrund von einer Betauung des Wärmetauschers dessen Effizienz zu weit absinkt.

In einer weiteren vorteilhaften Ausgestaltung der Erfindung ist ein Drucksensor vor und ein Drucksensor in Luftstromrichtung hinter einem im Luftkanal angeordneten Luftfilter positioniert. Es kann dann vorgesehen sein, bei einer vorgegebenen Drehzahl des mindestens einen Ventilators zu überwachen, ob die Druckdifferenz einen vorgegebenen Druckdifferenz-Grenzwert überschreitet, wobei bei Überschreitung ein Signal ausgegeben wird, das zu einem Wechseln und/oder Reinigen des Luftfilters auffordert. Dieses stellt sicher, dass die Effizienz des Wärmepumpenkreislaufs nicht durch einen zu sehr verstopften Luftfilter verringert ist. Es wird ausgenutzt, dass bei vorgegebener Drehzahl und bekannter sonstiger Betriebssituation (z.B. einer Messung jeweils zu Beginn eines Spülprogramms, wenn noch keine Betauung des Wärmetauschers vorliegt) die Druckdifferenz Aussagen über den Verschmutzungszustand des Luftfilters ermöglicht.

Die Erfindung wird nachfolgend anhand eines Ausführungsbeispiels mit Hilfe von Figuren näher erläutert. Die Figuren zeigen:
- Fig. 1: eine schematische Schnittdarstellung einer Geschirrspülmaschine mit einem Wärmepumpenkreislauf;
- Fig. 2-6: jeweils eine schematische Darstellung eines Luftkanals mit Wärmetauscher und Ventilator(en) eines Wärmepumpenkreislaufs in verschiedenen Ausgestaltungen; und
- Fig. 7, 8: jeweils ein Diagramm zur Verdeutlichung eines erfindungsgemäßen Betriebsverfahrens.

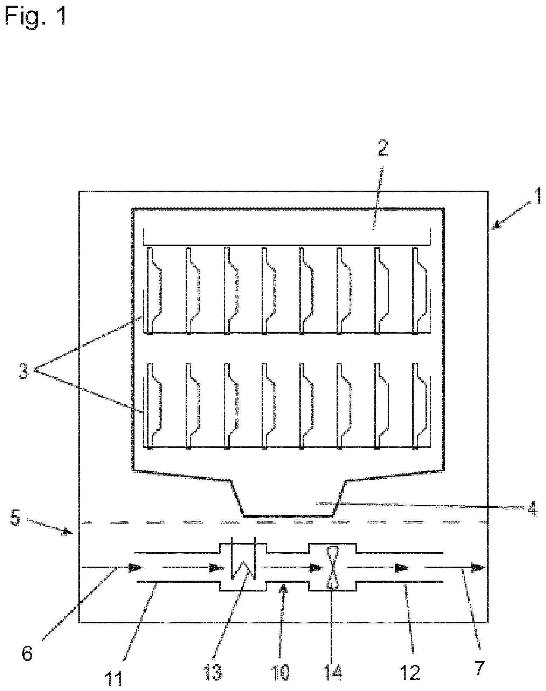

In Fig. 1 ist zunächst eine Geschirrspülmaschine 1, die zur Durchführung eines anmeldungsgemäßen Betriebsverfahrens geeignet ist, in einem schematischen Schnittbild dargestellt. Der Schnitt ist einer vertikalen Ebene ausführt, die senkrecht zu einer in den Figuren auf der rechten Seite liegenden Front der Geschirrspülmaschine 1 verläuft.

Die Geschirrspülmaschine 1 weist einen Spülraum 2 auf, in den Spülgut eingeräumt werden kann und in dem Spülflüssigkeit zur Reinigung des Spülguts versprüht wird. Beispielhaft sind zwei Spülgutträger 3 mit Spülgut dargestellt. Zum Versprühen der Spülflüssigkeit sind beispielsweise rotierende Sprüharme vorhanden, die aus Gründen der Übersichtlichkeit hier nicht gezeigt sind. Vom Spülgut oder Wänden des Spülraums 2 abtropfende Spülflüssigkeit sammelt sich in einem Sammeltopf 4 in einem unteren Bereich des Spülraums 2. Von dort wird die Spülflüssigkeit über eine Umwälzpumpe mit Druck beaufschlagt wieder im Spülraum 2 zur Reinigung eingesetzt, wodurch ein Spülkreislauf gebildet ist. Der Sammeltopf 4 ist ebenso wie die Umwälzpumpe in einem Sockel 5 der Geschirrspülmaschine 1 unterhalb des Spülraums 2 angeordnet.

Der Spülraum 2 der Geschirrspülmaschine 1 ist von vorne über eine schwenkbare Tür zugänglich, auf die eine (Möbel-) Front aufgesetzt ist, um einer Küchenzeile, in die die Geschirrspülmaschine 1 eingebaut ist, ein einheitliches Erscheinungsbild zu geben. Aus Gründen der Übersichtlichkeit ist die schwenkbare Tür mitsamt der (Möbel-) Front in der Figur nicht näher dargestellt.

Im Sockel 5 verläuft von vorne nach hinten ein Luftkanal 10, in dem sich ein Wärmetauscher 13 eines Verdampfers und mindestens ein Ventilator 14 befindet. Der Verdampfer ist Teil eines weiter nicht dargestellten Wärmepumpenkreislaufs, durch den Wärme aus der Umgebung aufgenommen wird und zum Aufheizen der Spülflüssigkeit eingesetzt wird.

Im Bereich der Front der Geschirrspülmaschine 1 ist ein Lufteinlass 11 angeordnet, über den Luft in den Luftkanal 10 eingesaugt werden kann. Im vorderen Bereich des Luftkanals 10 kann ein Luftfilter positioniert sein, durch den im Betrieb der Geschirrspülmaschine 1 beim Benutzen der Wärmepumpe über den Ventilator 14 Luft in den Luftkanal 5 eingesaugt wird. Dadurch entsteht im Betrieb der Wärmepumpe ein Luftstrom, der in Fig. 1 durch entsprechende Strömungspfeile schematisch skizziert ist.

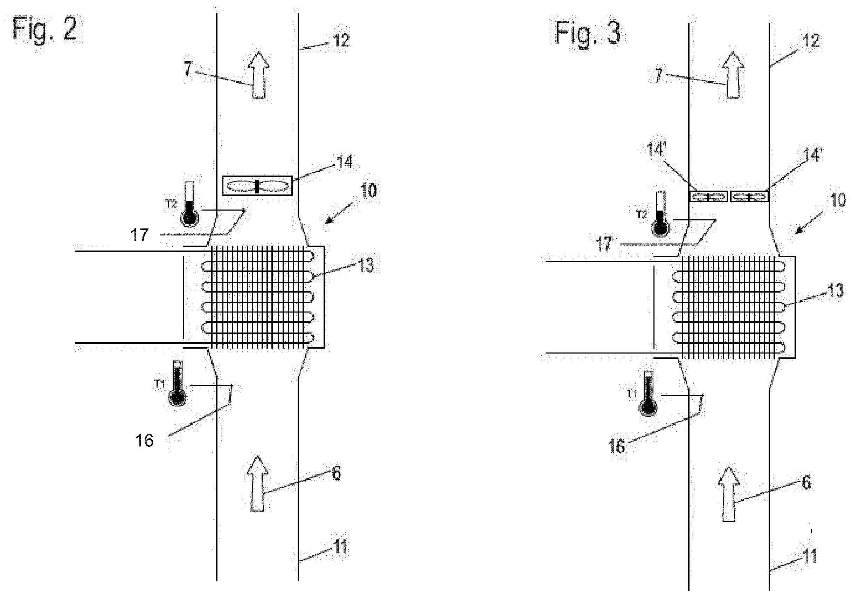

In den nachfolgend beschriebenen Figuren 2 bis 6 sind verschiedenen Ausgestaltungen von Luftkanälen 10 wiedergegeben, die in einem Wärmenpumpenkreislauf beispielsweise der in Fig. 1 gezeigten Geschirrspülmaschine 1 eingesetzt werden können und die eine Durchführung eines anmeldungsgemäßen Betriebsverfahrens ermöglichen. In allen Figuren kennzeichnen gleiche Bezugszeichen gleiche oder gleichwirkende Elemente.

Fig. 2 zeigt in einer schematischen Schnittdarstellung ein erstes Beispiel eines Luftkanals 10, der bei der Geschirrspülmaschine 1 der Fig. 1 eingesetzt werden kann. Der Luftkanal 10 weist einen Lufteinlass 11, in den einströmende Luft 6 eintritt, und einen Luftauslass 12, aus dem ausströmende Luft 7 austritt, auf. Im Luftkanal 10 ist - hier schematisch und beispielhaft mittig angeordnet - ein Wärmetauscher 13 positioniert, der von der einströmenden Luft 6 durchströmt wird. In Strömungsrichtung der einströmenden bzw. ausströmenden Luft 6, 7 ist in diesem Beispiel hinter dem Wärmetauscher 13 ein Ventilator 14, hier als Axialventilator ausgebildet, im Luftkanal 10 angeordnet.

Der Ventilator 14 ist mit einer hier nicht dargestellten Steuerung gekoppelt, die ihn drehzahlvariabel ansteuern kann. Bevorzugt ist die Steuerung in eine übergeordnete Steuereinrichtung der Geschirrspülmaschine 1 integriert. Der Ventilator 14 kann beispielsweise ein Gleichstrommotor mit Kollektor sein, der in einem PWM (Pulsweiten-Modulations) - Verfahren angesteuert wird. Durch eine Variation des Pulsweitenverhältnisses kann eine Drehzahl des Ventilators 14 im Wesentlichen verlustfrei und in weiten Drehzahlgrenzen eingestellt werden.

Der Ventilator 14 kann - wie dargestellt - in der Luftströmungsrichtung hinter dem Wärmetauscher 13 angeordnet sein. Es ist in alternativen Ausgestaltungen auch möglich, den Ventilator 14 vor dem Wärmetauscher 13 anzuordnen. Weiter können auch zwei oder mehr hintereinander positionierte Ventilatoren 14 eingesetzt werden, die vor, hinter oder teilweise vor und teilsweise hinter dem Wärmetauscher 13 positioniert sind.

In einem Bereich vor und einem Bereich hinter dem Wärmetauscher 13 ist jeweils ein Temperatursensor 16, 17 angeordnet. Mit den beiden Temperatursensoren 16, 17 kann entsprechend eine Temperatur T1, T2 der einströmenden Luft 6 bzw. der ausströmenden Luft 7 gemessen werden. Eine aus den gemessenen Temperaturen T1, T2 bestimmte Temperaturdifferenz, die durch den Wärmetauscher 13 erzielt wird und/oder die gemessene Temperatur der ausströmenden Luft 7 kann in einem Ausführungsbeispiel des anmeldungsgemäßen Betriebsverfahrens zur Steuerung des Ventilators 14 eingesetzt werden. Dazu sind die Temperatursensoren 16, 17 mit der genannten Steuerung des Ventilators 14 gekoppelt. Die Temperatursensoren 16, 17 werden ausgewertet, um die Temperaturen T1, T2 zu bestimmen. Abhängig von den gemessenen Temperaturen T1, T2 (und ggf. weiterer Größen) wird die Drehzahl des Ventilators 14 variiert. Beispielsweise kann bei einer zu geringen Temperatur der ausströmenden Luft 7, die von Benutzern einer Küche, in der die Geschirrspülmaschine aufgestellt ist, als unangenehm empfunden werden kann, da sie z. B. zu kalten Füßen führen kann, der Luftvolumenstrom erhöht werden, indem die Drehzahl des Ventilators 14 erhöht wird.

Fig. 3 zeigt eine alternative Ausgestaltung des Luftkanals 10 der Fig. 2. In diesem Beispiel sind statt des einen Ventilators 14 zwei kleinere (bezogen auf den Durchmesser der Flügel und damit das radiale Einbaumaß) Ventilatoren 14' eingesetzt. Es ergibt sich eine in vielen Einbausituationen vorteilhafte flache rechteckige Querschnittsform des Luftkanals 10.

Eine Variation des Luftstroms durch den Luftkanal 10 kann bei dieser Ausgestaltung dadurch erfolgen, dass einer oder beide der Ventilatoren 14' drehzahlgesteuert betrieben werden. Alternativ kann auch einer der Ventilatoren 14' ein- oder ausgeschaltet werden, um den Luftstrom in zumindest zwei Stufen zu variieren. In dem Fall kann ein Rückschlagventil, z.B. in Form einer Klappe oder eines Schiebers vorgesehen sein, um einen Luftrückstrom zu unterbinden.

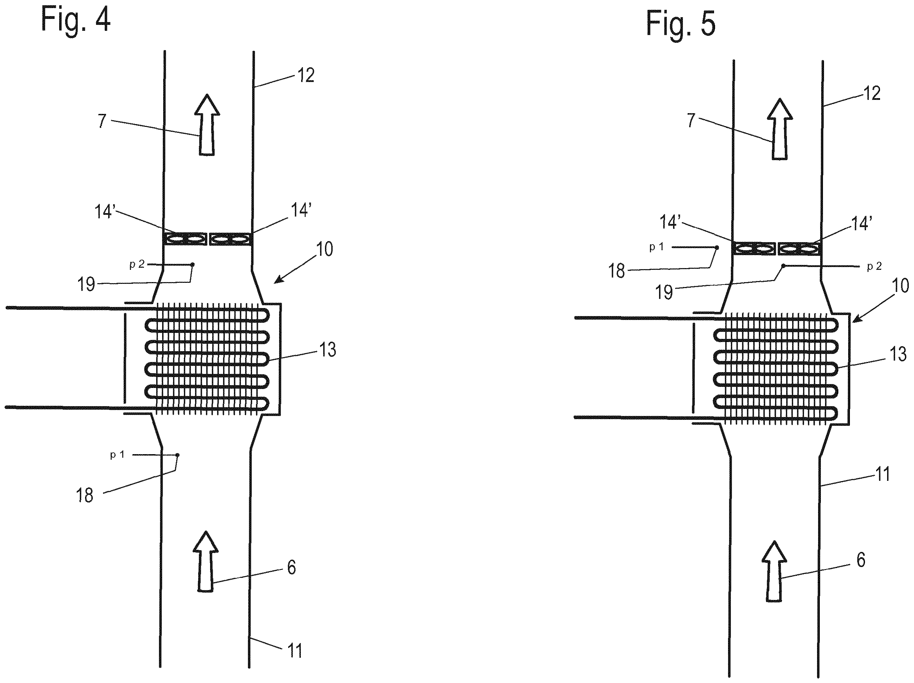

Gemäß der Erfindung erfolgt, wie in Fig. 4 gezeigt, vor bzw. hinter dem Wärmetauscher 13 eine Druckmessung mit Hilfe von Drucksensoren 18, 19 .

Beim dargestellten Beispiel wird ein erster Druck p1 vor dem Wärmetauscher 13 und ein zweiter Druck p2 hinter dem Wärmetauscher 13 ermittelt. Aus einer Druckdifferenz (p1-p2) lässt sich der geförderte Luftvolumenstrom bestimmen. Es kann dann beispielsweise vorgesehen sein, die Ventilatoren 14' abhängig von der gemessenen Druckdifferenz zu steuern, um den Wärmetauscher 13 und damit den Wärmepumpenkreislauf in einem vorteilhaften Betriebsparameterbereich zu betreiben. Die gezeigte Druckmessung kann natürlich auch bei Verwendung nur eines Ventilators 14 eingesetzt werden.

Weiterhin lässt die Druckmessung und insbesondere die ermittelte Druckdifferenz einen Rückschluss auf einen Verschmutzungsgrad des Wärmetauschers 13 zu. Abhängig von einem abgeleiteten Verschmutzungsgrad kann beispielsweise ein Signal erzeugt werden, das den Benutzer auf eine notwendige oder sinnvollerweise durchzuführende Wartung hinweist. Eine alternative Anordnung der Drucksensoren 18, 19 ist in Fig. 5 dargestellt. Der Drucksensor 18 misst hierbei nicht den Druck im Luftkanal 10 vor dem Wärmetauscher 13, sondern einen Umgebungsdruck. Eine auf diese Weise gemessene Druckdifferenz p1-p2 erlaubt es, nicht nur einen Verschmutzungsgrad des Wärmetauschers 13, sondern auch eines ggf. den Wärmetauscher 13 vorgeordneten Luftfilters zu messen.

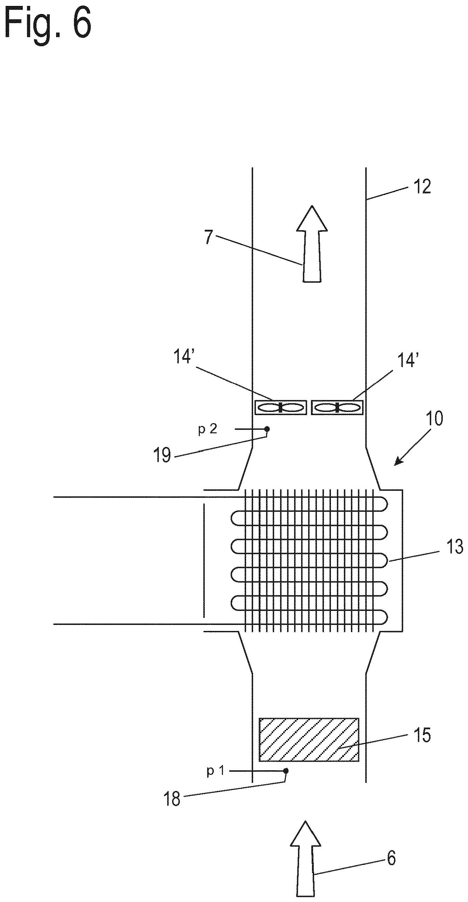

Ein Luftkanal 10 mit einem Luftfilter 15 ist beispielhaft in der Fig. 6 dargestellt. Hier ist der Luftfilter 15 dem Wärmetauscher 13 vorgeordnet, um eine Verschmutzung des schwierig zu reinigenden Wärmetauschers 13 durch eingesaugte Schmutzpartikel zu verhindern. Eine Druckdifferenz p1-p2 lässt Rückschlüsse auf den Verschmutzungsgrad des Luftfilters 15 zu. Übersteigt der ermittelte Verschmutzungsgrad einen vorgegebenen Wert, kann ein Signal an den Benutzer ausgegeben werden, das zum Wechsel des Luftfilters 15 auffordert.

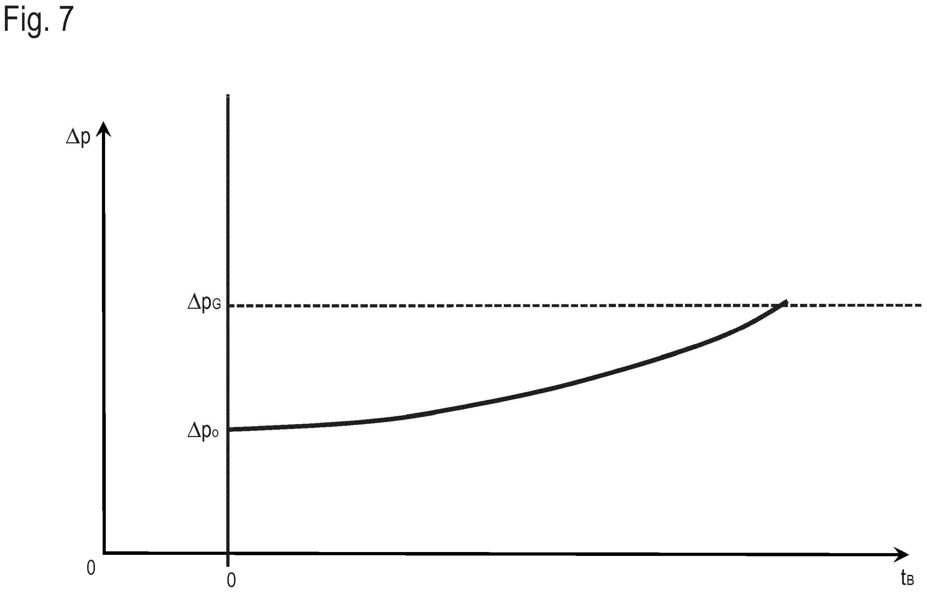

Diese Vorgehesweise wird durch das Diagramm der Fig. 7 näher erläutert In dem Diagramm ist auf einer vertikalen Achse eine gemessene Druckdifferenz Δp in Abhängigkeit einer Betriebsdauer t_{B} wiedergegeben. Die Druckdifferenz Δp wird in diesem Betriebsverfahren für eine fest vorgegebene Drehzahl der Ventilatoren 14'durchgeführt. Dieses kann beispielsweise in einem kurzen Messzyklus zum Anfang eines jeden Spülprogramms einer Geschirrspülmaschine erfolgen.

Der Verlauf der gemessenen Druckdifferenz Δp im Laufe der Betriebszeit t_{B} der Geschirrspülmaschine ist in einer Kurve 20 dargestellt. Es zeigt sich, dass die Druckdifferenz Δp mit steigender Betriebszeit t_{B} ansteigt, wobei dieser Anstieg im Laufe der Betriebszeit zunehmend steiler wird. Weiter ist ein vorgegebener Druckdifferenz-Grenzwert Δp_{G} als horizontale Linie im Diagramm eingezeichnet. Das Ansteigen der Kurve 20 deutet auf ein Zunehmen des Verstopfens des Luftfilters 15 hin. Sobald die Druckdifferenz Δp den Druckdifferenz-Grenzwert Δp_{G} erreicht, wird das gennannte Signal an den Benutzter, das zum Wechseln des Luftfilters 15 auffordert, ausgegeben.

Die in den Fig. 4-6 dargestellte Druckmessung und insbesondere die Bestimmung eines Differenzdrucks ermöglicht es zudem, den Betrieb des Wärmepumpenkreislaufs in der Geschirrspülmaschine effizienter durchzuführen. Mit Hilfe von bekannten Anlagenkennlinien des Luftkanals 10, die beispielsweise den Luftvolumenstrom in Abhängigkeit des gemessenen Differenzdrucks wiedergeben, kann aus einer Messung des Differenzdrucks der Luftvolumenstrom bestimmt werden. Die Anlagenkennlinie kann dabei in einer Steuereinheit der Geschirrspülmaschine hinterlegt sein. Es kann dann durch Drehzahlvariation der Ventilatoren 14, 14' der Luftvolumenstrom in Richtung eines für den Prozess optimalen Luftvolumenstroms eingestellt werden.

Zur Festlegung des optimalen Luftvolumenstroms kann optional die Raum- und/oder Umgebungstemperatur herangezogen werden. Diese kann durch die in den Fig. 2 und 3 gezeigten eigenständigen Temperatursensoren 16, 17 bestimmt werden oder auch durch einen Temperatursensor, der bereits in der Geschirrspülmaschine vorhanden ist und beispielsweise die Temperatur der Spülflüssigkeit ermittelt. Ein Wert eines solchen Temperatursensors, gemessen zu Beginn des Spülprozesses, gibt die Raum- / Umgebungstemperatur wieder. Ggf. kann ein Temperaturwert auch über ein Gebäudesteuerungssystem von der Steuereinrichtung der Geschirrspülmaschine abgefragt werden.

Weiter kann abhängig von den Ergebnissen der Druckmessung im Luftkanal 10 auch eine Leistung eines Verdichters im Wärmepumpenkreislauf angesteuert werden, wenn ein drehzahlsteuerbarer Verdichter eingesetzt wird. Die genannten Steuermöglichkeiten des Prozesses können kombiniert werden, und auch abhängig von einem von der Geschirrspülmaschine ausgeführten Spülprogramm gewählt werden. Die Prozesssteuerung kann beispielsweise unterschiedlich ausgebildet sein, abhängig davon, ob ein besonders energieeffizientes Spülprogramm oder ein besonders schnelles oder besonders leises Spülprogramm ausgeführt werden soll.

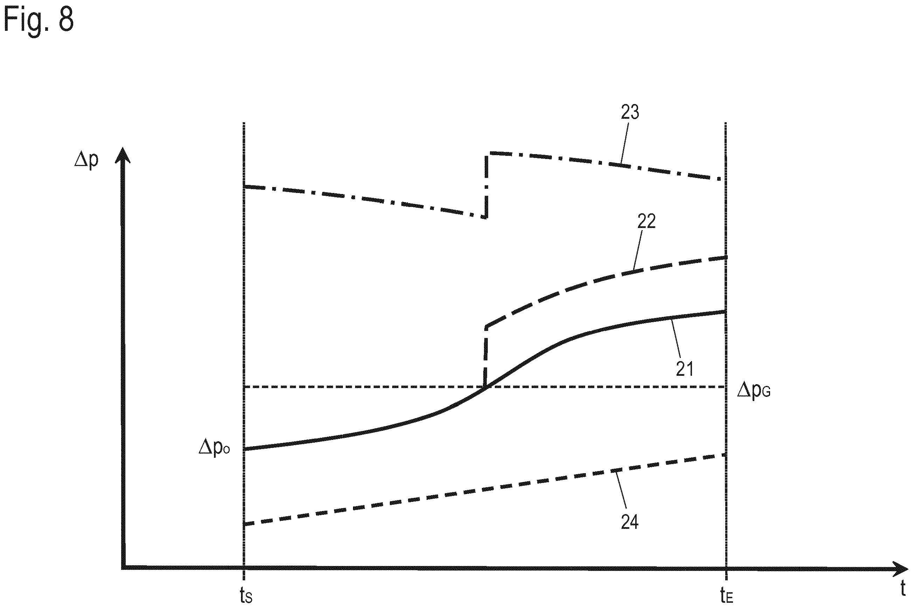

Ein Ausführungsbeispiel eines anmeldungsgemäßen Betriebsverfahrens wird nachfolgend anhand eines Diagramm in der Fig. 8 näher erläutert. Im Diagramm ist eine Zeitabhängigkeit eines Differenzdrucks Δp = p1-p2 dargestellt, wobei die Drücke p1 und p2 vor bzw. hinter dem Wärmetauscher 13, beispielsweise gemäß der Fig. 4, gemessen werden. Die Zeitabhängigkeit ist diesmal (im Unterschied zum Diagramm der Fig. 7) im Verlaufe eines Spülprogramms angegeben, wobei der Zeitpunkt ts den Programmstart und der Zeitpunkt t_{E} das Programmende angeben. Die Änderung der Druckdifferenz Δp von einem Anfangswert Δp₀ verläuft gemäß der dargestellten Kurve 21 für eine konstante Drehzahl der Ventilatoren 14, 14'. Ein Grund für das Ansteigen der Druckdifferenz Δp liegt in einer zunehmenden Betauung des Wärmetauschers 13, die durch die während des Programms ansteigende Betauungskurve 24 symbolisiert wird.

Anmeldungsgemäß ist wiederum ein Differenzdruckgrenzwert Δp_{G} definiert, der von der Kurve 21 etwa in der Mitte der Programmlaufdauer überschritten wird. Bei dem anmeldungsgemäßen Betriebsverfahren ist vorgesehen eine Drehzahl der Ventilatoren 14, 14' nach einer Überschreitung des Druckdifferenz-Grenzwert Δp_{G} zu erhöhen. Die Erhöhung der Drehzahl der Ventilatoren 14, 14' führt zu einem weiteren Ansteigen des Differenzdrucks Δp, der sich in der ab diesem Zeitpunkt bis zum Zeitpunkt des Programmendes t_{E} durchfahrenen Kurve 22 zeigt.

Mit zunehmender Betauung gemäß der Kurve 24 sinkt bei gleichbleibender Drehzahl der Ventilatoren 14, 14' der erzielbare Luftvolumenstrom. Dieses ist in der Kurve 23 wiedergegeben. Das anmeldungsgemäße Verfahren verhindert, dass der Luftvolumenstrom auf einen zu niedrigen Wert abfällt. Bei einem Überschreiten des Grenzwerts der Druckdifferenz Δp_{G} und nach Anheben der Drehzahl der Ventilatoren 14, 14' erhöht sich der Luftvolumenstrom, was sich im sprunghaften Ansteigen der Kurve 23 widerspiegelt. Auf diese Weise durch das anmeldungsgemäße Betriebsverfahren erreicht, dass auch zum Programmende hin ein ausreichend hoher Luftvolumenstrom erzielt wird und der Wärmepumpenkreislauf mit einer optimalen Energieeffizienz läuft.

### Bezugszeichen

- 1: Geschirrspülmaschine
- 2: Spülraum
- 3: Spülgutträger
- 4: Spültopf
- 5: Sockel
- 6: einströmende Luft
- 7: ausströmende Luft

- 10: Luftkanal
- 11: Lufteinlass
- 12: Luftauslass
- 13: Wärmetauscher
- 14,14': Ventilator
- 15: Luftfilter
- 16, 17: Temperatursensor
- 18,19: Drucksensor

- 20,21,22: Kurve (Druckdifferenz)
- 23: Kurve (Luftvolumenstrom)
- 24: Kurve (Betauung)

- T1, T2: Temperatur
- p1, p2: Druck
- Δp: Druckdifferenz
- Δp₀: Anfangswert der Druckdifferenz
- Δp_{G}: Druckdifferenz-Grenzwert
- V: Luftvolumenstrom
- t: Zeit
- t_{S}: Startzeitpunkt
- t_{E}: Endzeitpunkt
- t_{B}: Betriebszeit

## Patentansprüche

1. Verfahren zum Betreiben einer Geschirrspülmaschine (1) zur Reinigung von Spülgut in einem Spülraum (2), die einen Wärmepumpenkreislauf mit einem Wärmetauscher (13), der zusammen mit mindestens einem Ventilator (14, 14') zur Erzeugung eines Luftstroms in einem Luftkanal (10) positioniert ist, aufweist, **dadurch gekennzeichnet, dass** in dem Luftkanal (10) zumindest ein Drucksensor (18, 19) angeordnet ist, wobei eine Drehzahl des mindestens einen Ventilators (14, 14') abhängig von einem durch den Drucksensor (18, 19) gemessenen Druck (p1, p2) variiert wird.

2. Verfahren nach Anspruch 1, bei dem die Drehzahl des mindestens einen Ventilators (14, 14') abhängig von einer Temperatur variiert wird.

3. Verfahren nach Anspruch 1 oder 2, bei dem im Luftkanal (10) mindestens ein Temperatursensor (16, 17) angeordnet ist, wobei die Drehzahl des mindestens einen Ventilators (14, 14') zudem abhängig von einer durch den Temperatursensor (16, 17) gemessenen Temperatur (T1, T2) variiert wird.

4. Verfahren nach einem der Ansprüche 1 bis 3, bei dem mindestens zwei Drucksensoren (18, 19) zur Messung von zwei Drücken (p1, p2) vorgesehen sind, von denen zumindest einer im Luftkanal (10) angeordnet ist.

5. Verfahren nach Anspruch 4, wobei die Drehzahl des mindestens einen Ventilators (14, 14') abhängig von einer Druckdifferenz (Δp) zwischen den gemessenen Drücken (p1, p2) ist.

6. Verfahren nach Anspruch 4 oder 5, bei dem ein Drucksensor (18) vor und ein Drucksensor (19) in Luftstromrichtung hinter dem Wärmetauscher (13) positioniert ist.

7. Verfahren nach Anspruch 5 oder 6, bei dem die Drehzahl des mindestens einen Ventilators (14, 14') erhöht wird, wenn die Druckdifferenz (Δp) einen vorgegebenen Druckdifferenz-Grenzwert (Δp_{G}) überschreitet.

8. Verfahren nach einem der Ansprüche 4 bis 7, bei dem ein Drucksensor (18) vor und ein Drucksensor (19) in Luftstromrichtung hinter einem im Luftkanal (10) angeordneten Luftfilter (15) positioniert ist.

9. Verfahren nach einem der Ansprüche 5 bis 8, bei dem bei einer vorgegebenen Drehzahl des mindestens einen Ventilators (14, 14') überwacht wird, ob die Druckdifferenz (Δp) einen vorgegebenen Druckdifferenz-Grenzwert (Δp_{G}) überschreitet, wobei bei Überschreitung ein Signal ausgegeben wird, das zu einem Wechseln und/oder Reinigen des Luftfilters (15) auffordert.

10. Geschirrspülmaschine (1) zur Reinigung von Spülgut in einem Spülraum (2), aufweisend einen Wärmepumpenkreislauf mit einem Wärmetauscher (13), der zusammen mit mindestens einem Ventilator (14, 14') zur Erzeugung eines Luftstroms in einem Luftkanal (10) positioniert ist, wobei die Geschirrspülmaschine (1) insbesondere zur Durchführung des Verfahrens nach einem der vorhergehenden Ansprüche eingerichtet ist, **dadurch gekennzeichnet, dass**
in dem Luftkanal (10) zumindest ein Drucksensor (18, 19) angeordnet ist, und wobei eine Steuereinrichtung vorhanden ist, die dazu eingerichtet ist, eine Drehzahl des mindestens einen Ventilators (14, 14') abhängig von einem durch den Drucksensor (18, 19) gemessenen Druck (p1, p2) zu variieren.

11. Geschirrspülmaschine nach Anspruch 10,
wobei in dem Luftkanal (10) zumindest ein Temperatursensor (17) in Luftströmungsrichtung hinter dem Wärmetauscher (13) angeordnet ist, und wobei eine Steuereinrichtung vorhanden ist, die dazu eingerichtet ist, eine Drehzahl des mindestens einen Ventilators (14, 14') abhängig von einer durch den Temperatursensor (17) gemessenen Temperatur (T2) zu variieren

## Claims

1. Method for operating a dishwasher (1) for cleaning washware in a washing chamber (2), which dishwasher comprises a heat pump circuit having a heat exchanger (13) which is positioned in an air duct (10) together with at least one fan (14, 14') for generating an air flow, **characterised in that** at least one pressure sensor (18, 19) is arranged in the air duct (10), a speed of the at least one fan (14, 14') being varied depending on a pressure (p1, p2) measured by the pressure sensor (18, 19).

2. Method according to claim 1, in which the speed of the at least one fan (14, 14') is varied depending on a temperature.

3. Method according to either claim 1 or claim 2, in which at least one temperature sensor (16, 17) is arranged in the air duct (10), wherein the speed of the at least one fan (14, 14') is also varied depending on a temperature (T1, T2) measured by the temperature sensor (16, 17).

4. Method according to any of claims 1 to 3, in which at least two pressure sensors (18, 19) are provided for measuring two pressures (p1, p2), of which pressure sensors at least one is arranged in the air duct (10).

5. Method according to claim 4, wherein the speed of the at least one fan (14, 14') is dependent on a pressure difference (Δp) between the measured pressures (p1, p2).

6. Method according to either claim 4 or claim 5, in which a pressure sensor (18) is positioned upstream of and a pressure sensor (19) is positioned downstream of the heat exchanger (13) in the airflow direction.

7. Method according to either claim 5 or claim 6, in which the speed of the at least one fan (14, 14') is increased if the pressure difference (Δp) exceeds a specified pressure difference limit value (Δp_{G}).

8. Method according to any of claims 4 to 7, in which a pressure sensor (18) is positioned upstream of and a pressure sensor (19) is positioned downstream of an air filter (15) arranged in the air duct (10) in the air flow direction.

9. Method according to any of claims 5 to 8, in which, at a specified speed of the at least one fan (14, 14'), monitoring takes place as to whether the pressure difference (Δp) exceeds a specified pressure difference limit value (Δp_{G}), wherein, if this is exceeded, a signal is emitted which prompts changing and/or cleaning of the air filter (15).

10. Dishwasher (1) for cleaning washware in a washing chamber (2), the dishwasher comprising a heat pump circuit having a heat exchanger (13) which is positioned in an air duct (10) together with at least one fan (14, 14') for generating an air flow, wherein the dishwasher (1) is set up in particular for carrying out the method according to any of the preceding claims,
**characterised in that**
at least one pressure sensor (18, 19) is arranged in the air duct (10), and wherein a control device is provided, which is designed to vary a speed of the at least one fan (14, 14') depending on a pressure (p1, p2) measured by the pressure sensor (18, 19).

11. Dishwasher according to claim 10,
wherein at least one temperature sensor (17) is arranged in the air duct (10) downstream of the heat exchanger (13) in the air flow direction, and wherein a control device is provided, which is designed to vary a speed of the at least one fan (14, 14') depending on a temperature (T2) measured by the temperature sensor (17).

## Revendications

1. Procédé permettant de faire fonctionner un lave-vaisselle (1) destiné au nettoyage d'articles à laver dans un compartiment de lavage (2), lequel lave-vaisselle comporte un circuit de pompe à chaleur comportant un échangeur de chaleur (13), lequel, avec au moins un ventilateur (14, 14'), est positionné, pour générer un flux d'air, dans un conduit d'air (10), **caractérisé en ce qu'**au moins un capteur de pression (18, 19) est disposé dans le conduit d'air (10), dans lequel une vitesse de rotation de l'au moins un ventilateur (14, 14') varie en fonction d'une pression (p1, p2) mesurée par le capteur de pression (18, 19).

2. Procédé selon la revendication 1, dans lequel la vitesse de rotation de l'au moins un ventilateur (14, 14') varie en fonction d'une température.

3. Procédé selon la revendication 1 ou 2, dans lequel au moins un capteur de température (16, 17) est disposé dans le conduit d'air (10), dans lequel la vitesse de rotation de l'au moins un ventilateur (14, 14') varie en outre en fonction d'une température (T1, T2) mesurée par le capteur de température (16, 17).

4. Procédé selon l'une quelconque des revendications 1 à 3, dans lequel les au moins deux capteurs de pression (18, 19) sont fournis pour mesurer deux pressions (p1, p2), dont l'au moins un est disposé dans le conduit d'air (10).

5. Procédé selon la revendication 4, dans lequel la vitesse de rotation de l'au moins un ventilateur (14, 14') dépend d'une différence de pression (Δp) entre les pressions (p1, p2) mesurées.

6. Procédé selon la revendication 4 ou 5, dans lequel un capteur de pression (18) est positionné en amont et un capteur de pression (19) est positionné en aval dans la direction de flux d'air de l'échangeur de chaleur (13).

7. Procédé selon la revendication 5 ou 6, dans lequel la vitesse de rotation de l'au moins un ventilateur (14, 14') est augmentée si la différence de pression (Δp) est supérieure à une valeur limite de différence de pression (Δp_{G}) prédéterminée.

8. Procédé selon l'une quelconque des revendications 4 à 7, dans lequel un capteur de pression (18) est positionné en amont et un capteur de pression (19) est positionné en aval dans la direction de flux d'air d'un filtre à air (15) disposé dans le conduit d'air (10).

9. Procédé selon l'une quelconque des revendications 5 à 8, selon lequel, à une vitesse de rotation prédéterminée de l'au moins un ventilateur (14, 14'), on vérifie si la différence de pression (Δp) est supérieure à une valeur limite de différence de pression (Δp_{G}) prédéterminée, dans lequel en cas de dépassement, un signal est émis, lequel demande le changement et/ou le nettoyage du filtre à air (15).

10. Lave-vaisselle (1) destiné au nettoyage d'articles à laver dans un compartiment de lavage (2), comportant un circuit de pompe à chaleur comportant un échangeur de chaleur (13), lequel, avec au moins un ventilateur (14, 14'), est positionné, pour générer un flux d'air, dans un conduit d'air (10), dans lequel ledit lave-vaisselle (1) est en particulier conçu pour mettre en œuvre le procédé selon l'une quelconque des revendications précédentes, **caractérisé en ce que**
au moins un capteur de pression (18, 19) est disposé dans le conduit d'air (10), et dans lequel un dispositif de commande est fourni, lequel est conçu pour varier une vitesse de rotation de l'au moins un ventilateur (14, 14') en fonction d'une pression (p1, p2) mesurée par le capteur de pression (18, 19).

11. Lave-vaisselle selon la revendication 10,
dans lequel au moins un capteur de température (17) est disposé dans la direction d'écoulement d'air dans le conduit d'air (10) en aval de l'échangeur de chaleur (13), et dans lequel un dispositif de commande étant fourni, lequel est conçu pour varier une vitesse de rotation de l'au moins un ventilateur (14, 14') en fonction d'une température (T2) mesurée par le capteur de température (17).
